# EUROPEAN PATENT SPECIFICATION

(11) **EP 3 146 730 B1**
(45) Date of publication and mention of the grant of the patent: **16.10.2019**
(21) Application number: 15726048.0
(22) Date of filing: 20.05.2015
(51) Int. Cl.: H04S 7/00, H04S 3/00

(54) **CONFIGURING PLAYBACK OF AUDIO VIA A HOME AUDIO PLAYBACK SYSTEM**
KONFIGURIERUNG DER WIEDERGABE VON AUDIO ÜBER EIN HEIMAUDIOWIEDERGABESYSTEM
CONFIGURATION DE LA LECTURE D'UN CONTENU AUDIO PAR L'INTERMÉDIAIRE D'UN SYSTÈME DE LECTURE DE CONTENU AUDIO DOMESTIQUE

(30) Priority: 21.05.2014 US 201462001193 P
(43) Date of publication of application: 29.03.2017
(73) Proprietor: Dolby International AB, 1101 CN Amsterdam Zuidoost (NL)
(72) Inventor: HARDER, Sigrid, 90429 Nuremberg (DE); FRANCE, Robert Andrew, London Greater London W1D 3PZ (GB); ZIEGLER, Thomas, 90429 Nuremberg (DE); MUSIAL, Radoslaw, PL-53-611 Wroclaw (PL); OATES, Christopher, 90459 Nuremberg (DE)
(74) Representative: Dolby International AB Patent Group Europe
(86) International application number: PCT/EP2015/061138
(87) International publication number: WO 2015/177224

(56) References cited:
- EP-A2- 1 134 724
- WO-A1-2013/142668
- WO-A2-2013/006330
- US-B1- 8 068 105
- BREEBAART JEROEN ET AL: "Spatial Audio Object Coding (SAOC) - The Upcoming MPEG Standard on Parametric Object Based Audio Coding", AES CONVENTION 124; MAY 2008, AES, 60 EAST 42ND STREET, ROOM 2520 NEW YORK 10165-2520, USA, 1 May 2008 (2008-05-01), XP040508593,
- Mark Mann ET AL: "Object-Based Audio Applied to Football Broadcasts. The 5 live Football Experiment", , 1 November 2013 (2013-11-01), pages 1-17, XP055208256, Retrieved from the Internet: URL:http://downloads.bbc.co.uk/rd/pubs/whp /whp-pdf-files/WHP272.pdf [retrieved on 2015-08-18]
- "Pro Tools Reference Guide Version 9.0", , 24 September 2013 (2013-09-24), XP055208148, Retrieved from the Internet: URL:https://web.archive.org/web/2013092422 3135/http://www.avid.com/static/resources/ us/documents/ProToolsReferenceGuide.pdf [retrieved on 2015-08-17]
- ROBERT OLDFIELD ET AL: "Object-based audio for interactive football broadcast", MULTIMEDIA TOOLS AND APPLICATIONS, vol. 74, no. 8, 1 May 2013 (2013-05-01), pages 2717-2741, XP055208264, ISSN: 1380-7501, DOI: 10.1007/s11042-013-1472-2
- Anonymous: "Make object look draggable - User Experience Stack Exchange", , 22 November 2013 (2013-11-22), XP055457361, Retrieved from the Internet: URL:https://ux.stackexchange.com/questions /48335/make-object-look-draggable [retrieved on 2018-03-07]
- Anonymous: "Adobe Connect 9: Release Notes", , 1 August 2012 (2012-08-01), XP055512745, Retrieved from the Internet: URL:https://www.adobe.com/support/document ation/en/connect/9/pdfs/Adobe_Connect_9_Re lease_notes_en_US.pdf [retrieved on 2018-10-05]
- Jens Ahrens ET AL: "Introduction to the SoundScape Renderer (SSR) Contents", , 13 November 2012 (2012-11-13), pages 1-38, XP055135549, Retrieved from the Internet: URL:https://dev.qu.tu-berlin.de/attachment s/download/1283/SoundScapeRenderer-0.3.4-m anual.pdf [retrieved on 2014-08-20]

## Description

### FIELD OF THE INVENTION

The invention relates to configuring the playback of audio via a home audio playback system, where the audio comprises one or more audio objects.

### BACKGROUND OF THE INVENTION

A typical home audio playback system is arranged to receive and play back audio in a home listening environment. Such a home audio playback system may comprise an Audio Video Receiver (AVR) connected to multiple speakers in a surround sound configuration so as to play back audio via the speakers, e.g. in a home living room or home cinema room. For instance, the AVR may be connected to six speakers in a 5.1 surround sound configuration or eight speakers in a 7.1 surround sound configuration. That is, such an AVR may be configured to playback audio via 6, 8, or in the future even more speaker channels.

The played back audio may be based on a received object-based audio program. The object-based audio program may comprise many different audio objects, e.g. up to 128 different audio objects in some modern formats.

Clearly, if a home audio playback system having 6, 8 or even more speaker channels is to play back audio from an object-based audio program comprising up to 128 audio objects, then there will be many possible permutations of which of the audio objects are to be played back and via which of the speaker channels.

Jeroen Breebaart et al., Spatial Audio Object Coding (SAOC) - The upcoming MPEG standard on parametric object based audio coding, AES Convention 124, May 2008, AES, vol. 2, pp. 613-627 relates to Spatial Audio Object Coding (SAOC), which is a technique for efficient coding and flexible, user-controllable rendering of multiple audio objects based on transmission of a mono or stereo downmix of the object signals. The SAOC system extends the MPEG Surround standard by re-using its spatial rendering capabilities. Conceptually, the decoder side in SAOC can be divided into an object decoding part decomposing the N objects and a rendering part that allows manipulation and mixing of the original audio object signals into M output channels.

WO 2013/006330 A2 describes improved tools for authoring and rendering audio reproduction. Some such authoring tools allow audio reproduction data to be generalized for a wide variety of reproduction environments. Audio reproduction data may be authored by creating metadata for audio objects. The metadata may be created with reference to speaker zones. During the rendering process, the audio reproduction data may be reproduced according to the reproduction speaker layout of a particular reproduction environment.

Jens Ahrens et al., Introduction to the SoundScape Renderer (SSR), 13 November 2012, pp. 1-38, describes the so-called SoundScape Renderer (SSR) software framework for real-time spatial audio reproduction. SSR provides Wave Field Synthesis (WFS), binaural (HRTF-based) reproduction, binaural room (re-)synthesis (BRTF-based reproduction), head-tracked binaural playback, Ambisonics Amplitude Panning (AAP), and Vector Base Amplitude Panning (VBAP).

### SUMMARY OF THE INVENTION

The present invention provides a method of configuring playback of audio data via a home audio playback system, an apparatus for interacting with a home audio playback system, and a corresponding computer readable medium, having the features of the respective independent claims. Preferred embodiments are described in the dependent claims.

An aspect of the present invention relates to a method of configuring playback of audio data via a home audio playback system that receives a bitstream including the audio data and associated metadata, the audio data comprising one or more audio objects and the associated metadata being indicative of a desired spatial audio presentation of the one or more audio objects, the method comprising:
generating an output signal for a display, the output signal comprising data representing a graphical user interface, the graphical user interface comprising a positioning area, wherein the positioning area comprises a visual representation of a listening environment associated with the home audio playback system, and wherein the positioning area comprises a movable control object which represents at least one of said one or more audio objects, the movable control object being movable with respect to the visual representation of the listening environment by user interaction with the graphical user interface via an input device, whereby a current location of the movable control object can be selected by a user, the current location of the movable control object being representative of a user-desired playback position within the listening environment for the at least one of the one or more audio objects;
receiving an input signal from the user via the input device, the input signal comprising data representative of the user-desired playback position for the at least one of the one or more audio objects;
generating a configuration signal for configuring the home audio playback system, the configuration signal comprising data for causing the home audio playback system to playback the at least one of the audio objects according to the user-desired playback position for the at least one of the one or more audio objects; and
determining a respective content of the, or each of the, audio objects,
wherein the positioning area comprises a first visual element with a first visual indication that the movable control object representing the at least one of the one or more audio objects has been selected by the user and wherein the first visual element comprises a second visual indication when the movable control object representing the at least one of the one or more audio objects represents an audio object which currently carries sound;
wherein the positioning area comprises a second visual element with a third visual indication that the movable control object representing the at least one of the one or more audio objects is movable, or wherein the first visual element comprises the third visual indication that the movable control object representing the at least one of the one or more audio objects is movable;
wherein the positioning area further comprises a third visual element arranged to indicate at least one valid location with respect to the visual representation of the listening environment, the valid location being a location which the movable control object can occupy, and a fourth visual element arranged to indicate at least one invalid location with respect to the visual representation of the listening environment, the invalid location being a location which the movable control object cannot occupy;
wherein the graphical user interface further comprises an object selection list area; wherein the object selection list area comprises at least one selectable control object, the at least one selectable control object being configured to allow the user to enable playback of one or more of the audio objects;
wherein the object selection list area comprises plural control objects, and the control objects are arranged into plural groups in the object selection list area; and wherein the allocation of the control objects to the groups is based on the respective content of the control objects.

Thus, in the method it is suggested to make it possible for the user to choose an apparent playback position within the listening environment where the user wants the sound to appear.

As noted above, the positioning area comprises a first visual element with a visual indication that the at least one of the one or more control objects has been selected by the user. When a control object is selected in an object selection list area e.g. an icon representing that control object is shown in the positioning area.

As noted above, the positioning area also comprises a second visual element with a visual indication that the movable control object is movable, or the first visual element comprises the visual indication that the movable control object is movable. For example the control object can have a specific shape when it is movable or just being movable along a circumference of a circle.

As noted above, first visual element also comprises a visual indication when the control object is active. A control object is active when the audio object that the control object represents carries sound. For example when a commentator is speaking the control object is active. An icon that represents the control object on the positioning area may have a special color or highlighting when it is active. This makes it easy for the user to identify the control objects and move selected control objects to certain places in the listening environment.

As noted above, the positioning area comprises a further visual element arranged to indicate at least one valid location with respect to the visual representation of where the one or more speakers are located, the valid location being a location which the movable control object can occupy. Depending on the speaker set-up, the user can see on the positioning area of the GUI where it would be possible to place the audio objects. E.g. it may be along a circumference of a circle.

As noted above, the method comprises determining a respective content of control object of the, or each of the, audio objects. In one embodiment the respective content is any one of:
representative of commentary;
representative of crowd noise;
representative of team radio; or
representative of social media chat.

As noted above, the graphical user interface further comprises an object selection list area, wherein the object selection list area comprises at least one selectable control object, the at least one selectable control object being configured to allow the user to enable playback of one or more of the control objects. If the user enables control objects in the object selection list area they will show up in the positioning area.

The object selection list area also may comprise at least one further selectable control object, the at least one further selectable control object being configured to allow the user to select a playback volume of the one or more enabled control objects.

As noted above, the object selection list area comprises plural control objects, and the control objects are arranged into plural groups in the object selection list area. The allocation of control objects to the groups is based on the respective content of the control objects. E.g. the user may find all audio objects with a certain audio content under a common group. In one embodiment the number of control objects in the groups may be based on the respective content of the control objects.

In one embodiment the home audio playback system receives information related to the audio, the audio-related information comprising resources specific for a current program of the audio, wherein the resources comprise images for object icons to be displayed in association with the control object(s) in the object selection list area and/or in the positioning area. The resources for a current program are downloaded through a file transfer protocol (FTP) link.

This embodiment makes it possible to have pre-determined programs for each sporting event. In for example a motor sports event, a specific icon can be team radio.

The home audio playback system may comprise two or more speakers which are arranged according to one of:
a 2.0 speaker configuration,
a 5.1 speaker configuration,
a 7.1 speaker configuration,
a 3D speaker configuration or
a sound bar speaker configuration.

Further embodiments comprise determining, from the input signal, a user command to store the selection of the one of the control objects as a preset but can also comprise a user command to store the user-desired playback position as a preset.

Further embodiment comprises communicating the configuration signal to the home audio playback system. This can be done by using an Internet-based protocol.

An example that is not covered by the claims but useful for understanding the present invention relates to a method of configuring playback of audio via a home audio playback system, the audio comprising two or more audio objects, the method comprising:
generating an output signal for a display, the output signal comprising data representing a graphical user interface, the graphical user interface comprising a balance adjustment area, wherein the balance adjustment area comprises:
   a first icon at a first position, the first icon representing one or more of the audio objects which are foreground objects,
   a second icon at a second position, the second icon representing one or more of the audio objects which are background objects,
   a movable control object which is movable between the first position and the second position whereby a current position of the movable control object can be selected by the user, the current position of the movable control object relative to the first position being representative of a user-selected volume level for the one or more foreground objects, the current position of the movable control object relative to the second position being representative of a user-selected volume level for the one or more background objects;
receiving an input signal from the user via an input device, the input signal comprising data representative of the user-selected volume level for the one or more foreground objects and data representative of the user-selected volume level for the one or more background objects; and
generating a configuration signal for configuring the home audio playback system, the configuration signal comprising data suitable for causing the home audio playback system to playback the two or more audio objects according to the respective user-selected volume levels for the one or more foreground objects and the one or more background objects.

This method makes it possible to use only one control object for effecting two actions. When moving the control object it will result in an increase of the volume level of certain pre-selected audio objects and at the same time decrease the volume level of other pre-selected audio objects. If the user wants to increase intelligibility of foreground objects and decrease volume of background objects, the user increases the volume level for these foreground objects with the balance adjuster by moving the balance adjuster to the first position. This will at the same time result in a decrease in volume level for the background objects.

In one example the movable control object may be a slider which is movable in a straight line between the first and second position. A slider would make it easy and flexible to only need one control object for effecting two actions.

In one example it is possible to determine from the input signal, a user command to store:
the one or more background and the one or more foreground objects as presets;
the volume level of the background objects as a preset;
the volume level of the foreground objects as a preset.

This example would make it comfortable to know where the audio objects are positioned in the listening environment at a specific preset and what volume levels the different audio objects have for a specific preset.

This example would work well for example with two or more speakers which are arranged according to one of:
a 2.0 speaker configuration,
a 5.1 speaker configuration,
a 7.1 speaker configuration,
a 3D speaker configuration or
a sound bar speaker configuration.

The aspects, embodiments, and examples as recited above for the methods are also applicable to the respective apparatus.

In a further example, the corresponding apparatus would be suitable to receive the input signal via wireless communications channel such as IR-channel and transmit the output signal via a wired channel such as for example HDMI, VGA, DVI or SCART cable.

In a further example of the apparatus, the display and the input device are integrated in a touch screen.

### BRIEF DESCRIPTION OF DRAWINGS

Figure 1 shows an overview of an example of a broadcast system which is transmitting signals to a home playback system according to an embodiment of the present invention.
Figure 2 shows in more detail an example of the home playback system as shown in figure 1.
Figure 3 shows in more detail an example of the home playback system as shown in figure 2.
Figure 4 shows an overview of signaling of a processing unit of user control unit 303 in figure 3.
Figure 5 shows a flowchart of generating an output signal of the processing unit as in figure 4.
Figure 6 shows an overview of a graphical user interface according to an embodiment of the invention, produced on an output device as in figure 4.
Figure 7 shows a detailed view of the positioning area of the graphical user interface as shown in figure 6.
Figure 8 shows an example of the graphical user interface to control volume of audio objects as shown in figure 6.
Figure 9 shows a flowchart of user interaction with the graphical user interface via a user input device.
Figure 10 shows a flowchart of processing the signaling of a user input from the user interaction of figure 9.

### Notation and Nomenclature

Throughout this disclosure including in the claims, the expression "system" is used in a broad sense to denote a device, system, or subsystem. For example, a subsystem that implements a decoder may be referred to as a decoder system, and a system including such a subsystem (e.g., a system that generates X output signals in response to multiple inputs, in which the subsystem generates M of the inputs and the other X - M inputs are received from an external source) may also be referred to as a decoder system.

Throughout this disclosure including in the claims, the term "processor" is used in a broad sense to denote a system or device programmable or otherwise configurable (e.g., with software or firmware) to perform operations on data (e.g., audio, or video or other image data). Examples of processors include a field-programmable gate array (or other configurable integrated circuit or chip set), a digital signal processor programmed and/or otherwise configured to perform pipelined processing on audio or other sound data, a programmable general purpose processor or computer, and a programmable microprocessor chip or chip set.

Throughout this disclosure including in the claims, the expression "audio video receiver" (or "AVR") denotes a receiver in a class of consumer electronics equipment used to control playback of audio and video content, for example in a home theater.

Throughout this disclosure including in the claims, the expression "soundbar" denotes a device which is a type of consumer electronics equipment (typically installed in a home theater system), and which includes at least one speaker (typically, at least two speakers) and a subsystem for rendering audio for playback by each included speaker (or for playback by each included speaker and at least one additional speaker external to the soundbar).

Throughout this disclosure including in the claims, the expression "metadata" (e.g., as in the expression "processing state metadata") refers to separate and different data from corresponding audio data (audio content of a bitstream which also includes metadata). Metadata is associated with audio data, and indicates at least one feature or characteristic of the audio data (e.g., what type(s) of processing have already been performed, or should be performed, on the audio data, or the trajectory of an object indicated by the audio data). The association of the metadata with the audio data is time-synchronous. Thus, present (most recently received or updated) metadata may indicate that the corresponding audio data contemporaneously has an indicated feature and/or comprises the results of an indicated type of audio data processing.

Throughout this disclosure including in the claims, the following expressions have the following definitions:
speaker and loudspeaker are used synonymously to denote any sound-emitting transducer. This definition includes loudspeakers implemented as multiple transducers (e.g., woofer and tweeter);
channel (or "audio channel"): a monophonic audio signal. Such a signal can typically be rendered in such a way as to be equivalent to application of the signal directly to a loudspeaker at a desired or nominal position. The desired position can be static, as is typically the case with physical loudspeakers, or dynamic;
audio program: a set of one or more audio channels (at least one speaker channel and/or at least one object channel) and optionally also associated metadata (e.g., metadata that describes a desired spatial audio presentation);
speaker channel (or "speaker-feed channel"): an audio channel that is associated with a named loudspeaker (at a desired or nominal position), or with a named speaker zone within a defined speaker configuration. A speaker channel is rendered in such a way as to be equivalent to application of the audio signal directly to the named loudspeaker (at the desired or nominal position) or to a speaker in the named speaker zone;
object channel: an audio channel indicative of sound emitted by an audio source (sometimes referred to as an audio "object"). Typically, an object channel determines a parametric audio source description (e.g., metadata indicative of the parametric audio source description is included in or provided with the object channel). The source description may determine sound emitted by the source (as a function of time), the apparent position (e.g., 3D spatial coordinates) of the source as a function of time, and optionally at least one additional parameter (e.g., apparent source size or width) characterizing the source;
object based audio program: an audio program comprising a set of one or more object channels (and optionally also comprising at least one speaker channel) and optionally also associated metadata (e.g., metadata indicative of a trajectory of an audio object which emits sound indicated by an object channel, or metadata otherwise indicative of a desired spatial audio presentation of sound indicated by an object channel, or metadata indicative of an identification of at least one audio object which is a source of sound indicated by an object channel); and
render: the process of converting an audio program into one or more speaker feeds, or the process of converting an audio program into one or more speaker feeds and converting the speaker feed(s) to sound using one or more loudspeakers (in the latter case, the rendering is sometimes referred to herein as rendering "by" the loudspeaker(s)). An audio channel can be trivially rendered ("at" a desired position) by applying the signal directly to a physical loudspeaker at the desired position, or one or more audio channels can be rendered using one of a variety of virtualization techniques designed to be substantially equivalent (for the listener) to such trivial rendering. In this latter case, each audio channel may be converted to one or more speaker feeds to be applied to loudspeaker(s) in known locations, which are in general different from the desired position, such that sound emitted by the loudspeaker(s) in response to the feed(s) will be perceived as emitting from the desired position. Examples of such virtualization techniques include binaural rendering via headphones (e.g., using Dolby Headphone processing which simulates up to 7.1 channels of surround sound for the headphone wearer) and wave field synthesis.
control object: a part of a user interface that a user can manipulate in order to control something.
active control object: a control object which represents an audio object which currently carries sound.

### DETAILED DESCRIPTION OF THE INVENTION

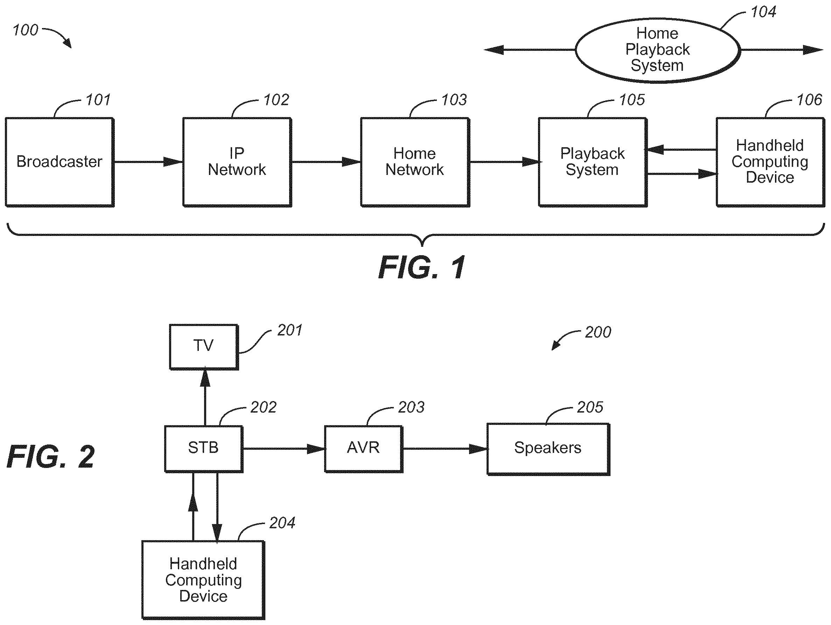

With reference to figure 1, a broadcasting system comprises a broadcaster 101 configured to broadcast audio and video of a sports event, e.g. a soccer match. Captured audio and video can be broadcasted e.g. to a television (TV), a desktop computer, a laptop, a tablet computer or the like. The broadcaster 101 can transmit the captured audio and video as digital information over an IP network 102 (e.g. including the Internet) to be received by a home network 103. The home network 103 is arranged to distribute the information wirelessly or with a wired connection to a home playback system 104. If the information is communicated through a wireless connection, it can be sent e.g. through a router via WIFI or through Bluetooth. As shown in figure 1, the home playback system 104 may comprise a playback system 105 and a handheld computing device 106.

In figure 2, an example of the home playback system of figure 1 is shown. The home playback system 200 comprises a television (TV) 201, a set-top box (STB) 202, an audio video receiver (AVR) 203 and speakers 205. Alternatively, in some embodiments, the AVR 203 and the speakers 205 can be replaced by a soundbar.

In this embodiment, a handheld computing device 204 interacts with the home playback system 200. The handheld computing device 204 is preferably a tablet computer, a mobile phone or the like.

The TV 201 typically communicates with the STB 202 and the AVR 203 through a wired connection or a wireless connection. The wired connection is preferably via a cable like an HDMI (High Definition Multimedia Interface), VGA (Video Graphics Array), SCART (Syndicat des Constructeurs d'Appareils Radiorécepteurs et Televiseurs), or DVI (Digital Visual Interface) cable, or similar. The speakers 205 may have a wired or wireless connection to the AVR 203. The handheld computing device 204 may have a wired or wireless connection to the STB 202.

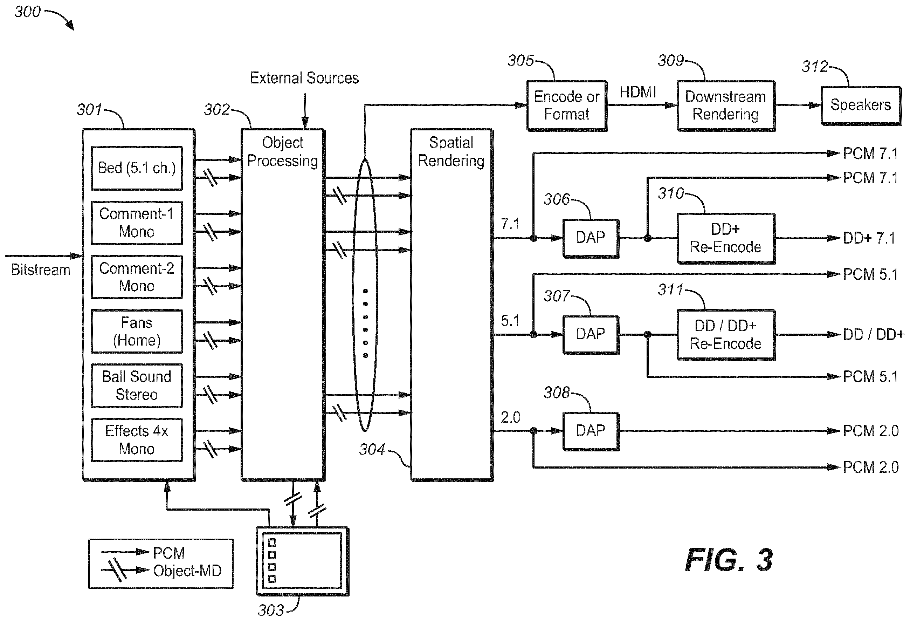

As shown in figure 3, the home playback system of figure 2 comprises a decoder 301, an object processing unit 302, user control unit 303, a spatial renderer 304, a digital audio processing subsystems 306, 307, 308 and re-encoders 305, 310, 311. The decoder 301, object processing unit 302, digital audio processing subsystems 306, 307, 308 and re-encoders 305, 310, 311 are preferably be part of the STB 202.

A downstream renderer 309 may be part of the AVR 203 (or a soundbar), and is configured to render audio for playback to the speakers 205 in the home playback system.

The user control unit 303 is preferably the handheld computing device 204.

The decoder 301 receives audio related data in a bit stream, e.g. an AC-3 encoded bit-stream.

The audio comprises audio objects. The bit-stream comprises data informing of available audio objects in the bit-stream.

With the user control unit 303 a user can select which audio objects to render. The user control unit 303 may be the handheld computing device 204 which is programmed to implement a graphical user interface (GUI). The GUI may provide to the user a menu of selectable "preset" mixes of objects and speaker channel content. The decoder decodes the channels of the selected audio objects, and outputs to the object processing unit 302 these selected audio object channels and object related metadata corresponding to the selected object channels.

The object processing unit 302 is controlled by control data from the user control unit 303 and object related metadata from decoder 301 and is configured to determine inter alia a spatial position and audio level for each of the selected objects.

The spatial rendering system 304 is configured to render the audio objects from object processing unit 302 for playback by speakers 312 of the home playback system. The spatial rendering system map to available speaker channels, the audio channels which has been selected by object processing unit 302 using the rendering parameters output from object processing unit 302.

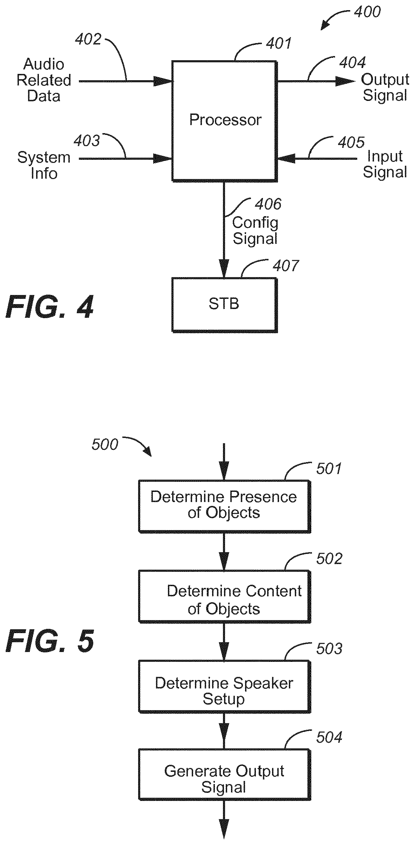

Figure 4 shows signaling of a processor 401 inside user control unit 303. Data relating to the audio is obtained via a wireless communications channel. This audio-related data 402 is derived, such as metadata of the bit-stream e.g. as specified in the AC-3 standard or the E-AC-3 standard.

Figure 5 is a flowchart showing the steps of a method performed by the process shown in figure 4.

From the audio-related data 402 the processor 401 determines 501 presence of audio objects. The processor 401 then determines 502 an audio content for each of the audio objects.

The respective content of the audio objects may be captured audio of any of: commentary, fan crowd, team radio, extras or social media chat. The commentary can be captured audio of a commentator for home fans, for away fans, for radio, or alternative commentaries e.g. in different languages. The fan crowd may comprise home, away or neutral crowd noise. The team radio may comprise radio communication between driver and engineer when watching a motor sports event. Extras may comprise stadium announcements (e.g. substitutions of players, emergency information), or a goal flash from other events. Social media chat may comprise text messages exchanged between friends during a game or a race. The text may be converted to speech by using Text-To-Speech (TTS) synthesis.

The processor 401 receives information related to the audio. The processor 401 may use a file transfer protocol (FTP) link to download resources specific for a current program. The current program can be a sporting event e.g. a rugby game, a soccer game or another sporting event. For each of the programs there are predefined resources. The resources are mainly images with icons or bars that are displayed on the GUI.

The processor 401 also obtains system information 403, e.g. by retrieving the system information from a memory. The system information may have been saved to the memory during a discovery phase.

From the system information, playback capability of the user's audio system is received. Depending on the user's audio playback system a speaker configuration of one or more speakers can be determined 503 for the home audio playback system 200.

The speaker configuration can e.g. be any one of: a 2.0 speaker set-up, a 5.1 set-up, a 7.1 set up, a 3D set-up or a soundbar set-up.

The processor 401 is then generates 504 the output signal 404 for an output device. For example the output device can in various embodiments comprise a display. The display may be integrated in a touch screen of the handheld computing device 204.

Depending on the output device the output signal can be transmitted via a wireless communications channel, or wired channel via a HDMI, VGA, SCART or DVI cable.

The output signal 404 can comprise data which is suitable for causing the output device to present to a user an indication of which audio objects are present in the audio. At least part of the data is suitable for causing the output device to generate a graphical user interface (GUI) 600.

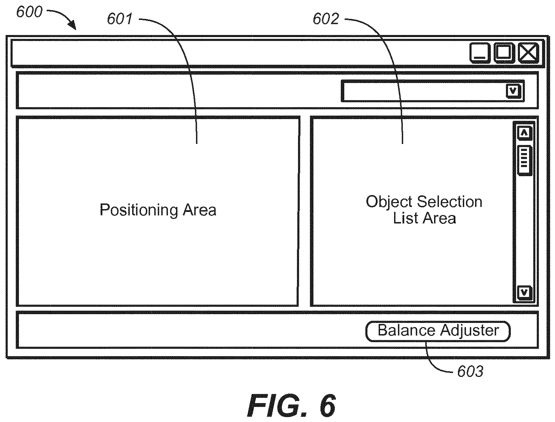

Figure 6 shows an overview of the different areas of the GUI 600, which comprises an object selection list area 602, a positioning area 601 and a balance adjustment area 603. The object selection list area 602 comprises at least one control object. The control object(s) are configured to allow the user to enable playback of one or more of the audio objects. E.g. each control object may be a rectangular element, selectable by a user in order to select of one or more audio objects associated with the control object, and with text inside identifying the element and highlighted with a color such as red or blue when the control object has been selected. It may be gray if it has not been selected.

The object selection list area 602 comprises at least one further control object configured to allow the user to select a playback volume of at least one of the audio objects. This further control object need not be in the object selection area 602.

The control objects are arranged in plural groups in a list in the object selection list area. The allocation of control objects to the groups is based on the respective content of the control objects that is predetermined by a Content creator. Further, also the number of control objects in the groups may be based on the respective content of the control objects. The object selection list area may be a scrollable region if there are many control objects such as 16 control objects.

When the control objects are selected in the object selection list area the respective control object will appear in the positioning area. In the positioning area these control objects may be visualized as icons.

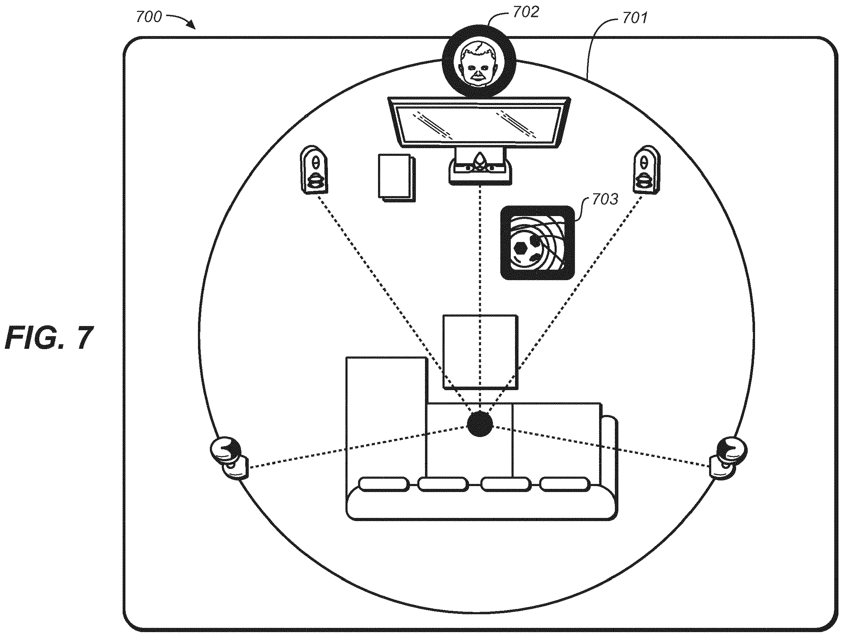

As shown in figure 7, the positioning area 601, 700 comprises a visual representation 700 of a listening environment. The positioning area 601, 700 can for example be shown as an image that shows where the speakers are positioned around a sofa and TV in a living room.

A 2.0 speaker set-up area is limited to an angle of -/+45 degrees from the center of the listening area. A 5.1 speaker set-up area is limited to a circle, which has an angle of 360 degree from the center of the listening area. A 7.1 speaker set-up area is limited to a circle, which has an angle of 360 degree from the center of the listening area.

A 3D set-up area is limited to half of a sphere of the listening area. A soundbar set-up area is also limited to half of a sphere of the listening area.

The positioning area 601, 700 comprises of at least one movable control object 702 which represents one of the enabled control objects in the object selection list area. This movable control object 702 is movable with respect to the visual representation. As shown in figure 7, the movable control objects 702 may be moveable around a perimeter 701 of the listening area, which may be the circumference of a circle 701. The size of the circle depends on the speaker configuration.

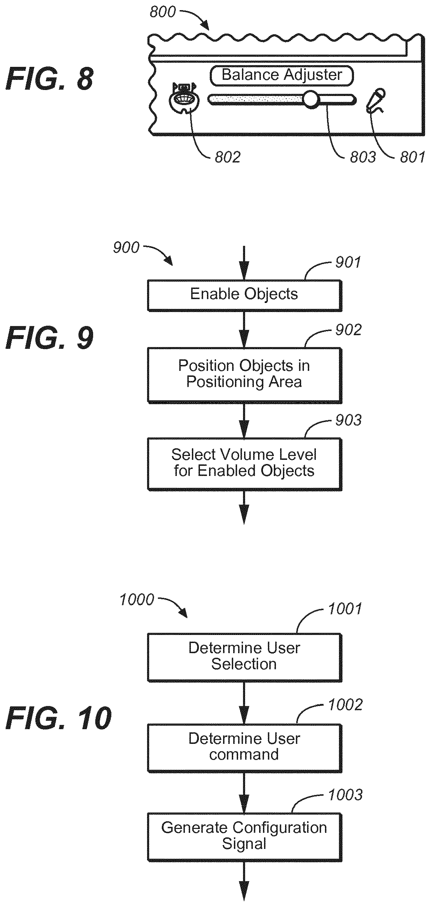

The current location of the movable control object 702 is selected by the user, as will be discussed below with reference to figure 9. Thus the current location of the movable control object 702 is representative of a user-desired playback position within the listening environment for the selected one of the control objects.

The positioning area 601, 700 comprises a first visual element which is a visual indication that the at least one of the one or more control objects has been selected by the user. E.g. an icon is shown in the positioning area. The first visual element can further comprise a visual indication of whether a control object is movable, or the positioning area can comprise a second visual element with a visual indication that the movable control object is movable. As shown in figure 7, the icon can for example be circle shaped 702 when it is movable and square shaped when it is non-movable 703.

The first visual element also comprises a visual indication when the control object is active. For example, an icon that represents the control object may be highlighted blue, when the audio object carries sound, e.g. wherein a commentator is speaking.

The positioning area 700 also comprises a further visual element arranged to indicate at least one valid location with respect to the visual representation in the listening environment, the valid location 701 being a location which the movable control object 702 can occupy. It also comprises a visual indication of at least one invalid location, the invalid location being a location which the movable control object cannot occupy. The control objects 702 in the positioning area 700 are movable along the circumference of the circle 701, which may be e.g. displayed in red in order to visually indicate to the user that the movable control object 702 can occupy any point on the circumference. When the user is moving the icon in allowable positions on the circumference of the circle in the positioning area, the icon is typically highlighted with a green/red shadow around the icon.

As shown in figure 8, the audio volume of the audio objects can be controlled by a movable control object 803 in a balance adjustment area 800 of the GUI 600. The balance adjustment area 800 comprises a first icon at a first position. This first position can be in a right-hand or upper part of the balance adjustment area 800. This first icon represents one or more of the audio objects, which are foreground objects 801.

Further the balance adjustment area comprises a second icon at a second position. This second position can be in a left-hand or lower part of a balance adjustment area. The second icon represents one or more of the audio objects which are background objects 802. A movable control object is movable between the first position and the second position whereby a current location of the movable control object can be selected by the user. The current position of the movable control object relative to the first position is representative of a user-selected volume level for the one or more foreground objects 801. The current position of the movable control object relative to the second position is representative of a user-selected volume level for the one or more background objects 802.

The audio objects that are possible to be background 802 and foreground objects 801 are pre-selected by a Content creator through metadata. The metadata is specific dependent on the different type of applications and can e.g. be sent in the bit-stream or be sent as external metadata.

In one example the movable control object may be a slider which is movable along a straight line. If the slider is moved to the right (or upwards) the slider increases audio volume for foreground objects 801 and at the same time decreases audio volume for the background objects 802. The user might for example want to increase intelligibility of foreground objects that he would like to hear better and decrease the volume of background ambience that he still wants to hear but at a lower volume.

If the slider is moved to the left (or downwards) the audio volume increases for the background objects 802 and decreases for foreground objects 801. In this way only one control object is needed for effecting two actions (increasing and decreasing audio volume for pre-selected audio object(s) at the same time).

The volume level of the background 802 and foreground objects 801 can also be stored as presets.

In figure 9 a flowchart describes user interaction with the GUI via a user input device. In this embodiment the user input device is part of a touch screen of user control unit 303. On the object selection list area 602 of the GUI the user enable control objects 901 which he would like to use. On the positioning area 601, 700 the user then positions the control objects 902 by moving them to available positions on the circle of 701. On the GUI the user further selects a volume level for the background and foreground objects 903 with the balance adjuster 803. The input signal is typically received by the processor 401 via a wireless communications channel such as an infrared (IR) channel.

In one example of a use scenario, there is a 5.1 speaker configuration for a home playback system as in figure 7.

Three control objects are selected out of the possible 5 control objects. The respective three control objects have captured audio content of a home team commentator, a social media chat, and home team crowd noise. In this example the 5.1 speaker configuration makes it possible to position the control objects along the circumference of a circle as in figure 7.

In the positioning area of the GUI the user will see a visual representation of the speaker set-up in the home playback environment. In the object selection list area the user will see the control objects. The control objects may on the object selection list area 602 appear as element bars and on the positioning area as icons. The user can select some of the control objects and these bars may then get blue colored. The selected control objects will then appear as icons on the positioning area 601.

The user may for example position the home team commentator icon along the circumference of the circle to the left of the TV, the social media chat icon along the circumference of the circle to the right of the TV and the team crowd noise icon along the circumference of the circle behind the sofa. The user will then in his living room hear the audio of the home team commentator as it appears from left of the TV, the audio of the social media chat as it appears from the right of the TV and the audio of the home team crowd noise as it appears from behind the sofa. The user can then on the GUI 600 of the handheld device move a slider which controls the audio volume level of the foreground objects (the home team commentator and the social media chat in this example) and the background audio objects (home team crowd noise). If it is desirable to decrease the audio volume of the home crowd noise and at the same time increase the audio volume of the home team commentator and the social media chat, the slider is moved towards the first icon 801.

Figure 10 present steps performed by the processor 401 in response to user input via the user input device.

The processor 401 receives an input signal 405 from the user input device. The input signal comprises data representative of:
the user-desired playback position 1001 for the at least one of the one or more audio objects,
the user-selected volume level 1001 of one or more background and foreground objects,
the user-selected audio objects 1001 to play back via the home audio playback system and data indicative for determining a user command 1002 to enable positioning and/or setting a playback volume level of the one or more audio objects.

The input signal also comprises data indicative for determining a user command 1002 to store the selection of the one of the audio objects as a preset, to store the perceived spatial position relative to the speaker configuration as a preset and/or to store the playback volume level as a preset.

The processor 401 then generates a configuration signal 406, 1003 for configuring the home audio playback system. The configuration signal data is suitable for causing the home audio playback system to selectively play back one or more audio objects.

Said data is suitable for causing the home audio playback system to perform at least one of: playback one of the audio objects according to a user-desired playback position; playback two or more audio objects according to respective user-selected volume levels for one or more foreground objects and one or more background objects.

The configuration signal data is also using presets to store predefined configurations of enabled audio objects, positions and volume for the enabled objects. The different types of presets for the audio object are preferably:
i. default which is prepared by a content creation and transmitted with a bit-stream,
ii. predefined, which are alternative presets also prepared by content creation
iii. user presets which are saved by the user.

Said data is also suitable to recall presets any time to restore object configuration, and is suitable to communicate with the audio playback system over a protocol as Transmission Control Protocol / Internet Protocol (TCP/IP.)

The present disclosure describes various example embodiments below, with reference to the drawings. It is to be noted that, for purpose of clarity, representations and descriptions of components and processes which are known to those skilled in the art, but which are not necessary to understand the various example embodiments, are omitted in the drawings and the description.

As will be appreciated by one skilled in the art, aspects of the present application may be embodied as a system, a device (e.g., a cellular telephone, a portable media player, a personal computer, a server, a television set-top box, or a digital video recorder, or any other media player), a method or a computer program product. Accordingly, aspects of the present application may take the form of an hardware embodiment, an software embodiment (including firmware, resident software, microcodes, etc.) or an embodiment combining both software and hardware aspects that may all generally be referred to herein as a "circuit," "module" or "system." Furthermore, aspects of the present application may take the form of a computer program product embodied in one or more computer readable mediums having computer readable program code embodied thereon.

Any combination of one or more computer readable mediums may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic or optical signal, or any suitable combination thereof.

A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wired line, optical fiber cable, RF, etc., or any suitable combination of the foregoing.

Computer program code for carrying out operations for aspects of the present application may be written in any combination of one or more programming languages, including an object oriented programming language such as Java, Smalltalk, C++ or the like and conventional procedural programming languages, such as the "C" programming language or similar programming languages. The program code may execute entirely on the user's computer as a stand-alone software package, or partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present application are described below with reference to flowchart illustrations and/or block diagrams of methods, apparatus (systems) and computer program products according to embodiments of the application. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational operations to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The scope of the present invention is defined by the appended claims. While implementations have been described by way of example and in terms of exemplary specific embodiments, it is to be understood that implementations of the invention are not limited to the disclosed embodiments. On the contrary, it is intended to cover various modifications and similar arrangements within the scope of the claims, as would be apparent to those skilled in the art.

## Claims

1. A method of configuring playback of audio data via a home audio playback system that receives a bitstream including the audio data and associated metadata, the audio data comprising one or more audio objects and the associated metadata being indicative of a desired spatial audio presentation of the one or more audio objects, the method comprising:
generating an output signal for a display, the output signal comprising data representing a graphical user interface (600), the graphical user interface (600) comprising a positioning area (601, 700), wherein the positioning area (601, 700) comprises a visual representation of a listening environment associated with the home audio playback system, and
wherein the positioning area (601, 700) comprises a movable control object (702) which represents at least one of said one or more audio objects, the movable control object (702) being movable with respect to the visual representation of the listening environment by user interaction with the graphical user interface (600) via an input device, whereby a current location of the movable control object (702) can be selected by a user, the current location of the movable control object (702) being representative of a user-desired playback position within the listening environment for the at least one of the one or more audio objects,
receiving an input signal from the user via the input device, the input signal comprising data representative of the user-desired playback position for the at least one of the one or more audio objects;
generating a configuration signal for configuring the home audio playback system, the configuration signal comprising data for causing the home audio playback system to playback the at least one of the audio objects according to the user-desired playback position for the at least one of the one or more audio objects;
wherein the positioning area (601, 700) comprises a first visual element with a first visual indication that the movable control object (702) representing the at least one of the one or more audio objects has been selected by the user and wherein the first visual element comprises a second visual indication when the movable control object (702) representing the at least one of the one or more audio objects represents an audio object which currently carries sound;
wherein the positioning area (601, 700) comprises a second visual element with a third visual indication that the movable control object (702) representing the at least one of the one or more audio objects is movable, or wherein the first visual element comprises the third visual indication that the movable control object (702) representing the at least one of the one or more audio objects is movable;
wherein the positioning area (601, 700) further comprises a third visual element arranged to indicate at least one valid location with respect to the visual representation of the listening environment, the valid location being a location which the movable control object (702) can occupy, and a fourth visual element arranged to indicate at least one invalid location with respect to the visual representation of the listening environment, the invalid location being a location which the movable control object (702) cannot occupy;
**characterised in that** the method further comprises
determining a respective content of the, or each of the, audio objects, wherein the graphical user interface (600) further comprises an object selection list area (602);
wherein the object selection list area (602) comprises at least one selectable control object, the at least one selectable control object being configured to allow the user to enable playback of one or more of the audio objects;
wherein the object selection list area (602) comprises plural control objects, and the control objects are arranged into plural groups in the object selection list area (602); and
wherein the allocation of the control objects to the groups is based on the respective content of the control objects.

2. The method of claim 1, wherein the respective content is any one of:
representative of commentary;
representative of crowd noise;
representative of team radio; or
representative of social media chat.

3. The method of any one of the preceding claims, wherein the object selection list area (602) comprises at least one further selectable control object, the at least one further selectable control object being configured to allow the user to select a playback volume of the one or more audio objects for which playback is enabled.

4. The method of any one of the preceding claims, wherein the number of control objects in the groups is based on the respective content of the control objects.

5. The method of claim 1, wherein the home audio playback system receives information related to the audio, the audio-related information comprising resources specific for a current program of the audio, wherein the resources comprise images for icons to be displayed in association with the control object(s) in the object selection list area (602) and/or in the positioning area (601, 700).

6. The method of any one of the preceding claims, wherein the home audio playback system comprises two or more speakers which are arranged according to one of:
a 2.0 speaker configuration,
a 5.1 speaker configuration,
a 7.1 speaker configuration,
a three-dimensional speaker configuration, or
a sound bar speaker configuration,
wherein the speakers in the 5.1 speaker configuration and the 7.1 speaker configuration are arranged on respective circles around a center of the listening environment, and the speakers in the three-dimensional speaker configuration are arranged on a half-sphere around the center of the listening environment.

7. The method of any one of the preceding claims, comprising determining, from the input signal, a user command to store:
the selection of the movable control object (702) representing the at least one of the one or more audio objects as a preset; and/or
the user-desired playback position as a preset.

8. The method of any one of the preceding claims, comprising:
receiving, via the bitstream, presets for the audio objects, the presets including a default preset prepared at content creation, and optionally one or more alternative presets prepared at content creation; and/or
presenting, via the graphical user interface, the user with a menu of selectable preset mixes of the audio objects and speaker channel content included in the bitstream.

9. The method of claim 1, comprising communicating the configuration signal to the home audio playback system.

10. An apparatus for interacting with a home audio playback system that receives a bitstream including audio data and associated metadata, and for configuring playback of the audio data via the home audio playback system, the audio data comprising one or more audio objects and the associated metadata being indicative of a desired spatial audio presentation of the one or more audio objects, the apparatus comprising a display, an input device, and a processor (401) configured to:
generate an output signal (404) for the display, the output signal (404) comprising data representing a graphical user interface (600), the graphical user interface (600) comprising a positioning area (601, 700), wherein the positioning area (601, 700) comprises a visual representation of a listening environment associated with the home audio playback system, and
wherein the positioning area (601, 700) comprises a movable control object (702) which represents at least one of said one or more audio objects, the movable control object (702) being movable with respect to the visual representation of the listening environment by user interaction with the graphical user interface (600) via the input device, whereby a current location of the movable control object (702) can be selected by a user, the current location of the movable control object (702) being representative of a user-desired playback position within the listening environment for the at least one of the one or more audio objects,
receive an input signal from the user via the input device, the input signal comprising data representative of the user-desired playback position for the at least one of the one or more audio objects;
generate a configuration signal for configuring home audio playback system, the configuration signal comprising data for causing the home audio playback system to playback the at least one of the audio objects according to the user-desired playback position for the at least one of the one or more audio objects;
wherein the positioning area (601, 700) comprises a first visual element with a first visual indication that the movable control object (702) representing the at least one of the one or more audio objects has been selected by the user and wherein the first visual element comprises a second visual indication when the movable control object (702) representing the at least one of the one or more audio objects represents an audio object which currently carries sound;
wherein the positioning area (601, 700) comprises a second visual element with a third visual indication that the movable control object (702) representing the at least one of the one or more audio objects is movable, or wherein the first visual element comprises the third visual indication that the movable control object (702) representing the at least one of the one or more audio objects is movable;
wherein the positioning area (601, 700) further comprises a third visual element arranged to indicate at least one valid location with respect to the visual representation of the listening environment, the valid location being a location which the movable control object (702) can occupy, and a fourth visual element arranged to indicate at least one invalid location with respect to the visual representation of the listening environment, the invalid location being a location which the movable control object (702) cannot occupy;
**characterised in that** the processor (401) is further configured to determine a respective content of the, or each of the, audio objects, wherein the graphical user interface (600) further comprises an object selection list area (602);
wherein the object selection list area (602) comprises at least one selectable control object, the at least one selectable control object being configured to allow the user to enable playback of one or more of the audio objects;
wherein the object selection list area (602) comprises plural control objects, and the control objects are arranged into plural groups in the object selection list area (602); and
wherein the allocation of the control objects to the groups is based on the respective content of the control objects.

11. A computer readable medium having stored thereon a plurality of computer-interpretable instructions which, when executed by a processor, causes the processor to perform the method of any of claims 1 to 9.

## Patentansprüche

1. Verfahren zum Konfigurieren der Wiedergabe von Audiodaten über ein Heim-Audiowiedergabesystem, das einen Bitstrom empfängt, welcher die Audiodaten und assoziierte Metadaten enthält, wobei die Audiodaten ein oder mehrere Audioobjekte umfassen, und die assoziierten Metadaten eine gewünschte räumliche Audiodarbietung des einen oder der mehreren Audioobjekte angeben, wobei das Verfahren umfasst:
Erzeugen eines Ausgabesignals für eine Anzeige, wobei das Ausgabesignal Daten umfasst, die eine grafische Benutzeroberfläche (600) repräsentieren, wobei die grafische Benutzeroberfläche (600) einen Positionierbereich (601, 700) umfasst, wobei der Positionierbereich (601, 700) eine visuelle Repräsentation einer Hörumgebung umfasst, die mit dem Heim-Audiowiedergabesystem assoziiert ist, und
- wobei der Positionierbereich (601, 700) ein bewegliches Steuerobjekt (702) umfasst, das mindestens eines aus dem einen oder den mehreren Audioobjekten repräsentiert, wobei das bewegliche Steuerobjekt (702) durch Benutzerinteraktion mit der grafischen Benutzeroberfläche (600) über ein Eingabegerät in Bezug auf die visuelle Repräsentation der Hörumgebung bewegt werden kann, wodurch ein aktueller Standort des beweglichen Steuerobjekts (702) von einem Benutzer ausgewählt werden kann, wobei der aktuelle Standort des beweglichen Steuerobjekts (702) für eine vom Benutzer für das mindestens eine aus dem einen oder den mehreren Audioobjekten gewünschte Wiedergabeposition innerhalb der Hörumgebung repräsentativ ist,
Empfangen eines Eingabesignals vom Benutzer über das Eingabegerät, wobei das Eingabesignal Daten umfasst, die für die vom Benutzer für das mindestens eine aus dem einen oder den mehreren Audioobjekten gewünschte Wiedergabeposition repräsentativ ist;
Erzeugen eines Konfigurationssignals zum Konfigurieren des Heim-Audiowiedergabesystems, wobei das Konfigurationssignal Daten umfasst, um das Heim-Audiowiedergabesystem dazu zu bringen, das mindestens eine der Audioobjekte gemäß der vom Benutzer für das mindestens eine aus dem einen oder den mehreren Audioobjekten gewünschten Wiedergabeposition wiederzugeben;
wobei der Positionierbereich (601, 700) ein erstes visuelles Element mit einer ersten visuellen Angabe umfasst, dass das bewegliche Steuerobjekt (702), welches das mindestens eine aus dem einen oder den mehreren Audioobjekten repräsentiert, vom Benutzer ausgewählt wurde, und wobei das erste visuelle Element eine zweite visuelle Angabe umfasst, wenn das bewegliche Steuerobjekt (702), welches das mindestens eine aus dem einen oder den mehreren Audioobjekten repräsentiert, ein Audioobjekt repräsentiert, das aktuell Sound überträgt;
wobei der Positionierbereich (601, 700) ein zweites visuelles Element mit einer dritten visuellen Angabe umfasst, dass das bewegliche Steuerobjekt (702), welches das mindestens eine aus dem einen oder den mehreren Audioobjekten repräsentiert, bewegt werden kann, oder wobei das erste visuelle Element die dritte visuelle Angabe umfasst, dass das bewegliche Steuerobjekt (702), welches das mindestens eine aus dem einen oder den mehreren Audioobjekten repräsentiert, bewegt werden kann;
wobei der Positionierbereich (601, 700) weiter ein drittes visuelles Element umfasst, das dazu eingerichtet ist, mindestens einen gültigen Standort in Bezug auf die visuelle Repräsentation der Hörumgebung anzugeben, wobei der gültige Standort ein Standort ist, den das bewegliche Steuerobjekt (702) einnehmen kann, und ein viertes visuelles Element, das dazu eingerichtet ist, mindestens einen ungültigen Standort in Bezug auf die visuelle Repräsentation der Hörumgebung anzugeben, wobei der ungültige Standort ein Standort ist, den das bewegliche Steuerobjekt (702) nicht einnehmen kann;
**dadurch gekennzeichnet, dass** das Verfahren weiter umfasst
Bestimmen eines jeweiligen Inhalts des, oder jedes der, Audioobjekte,
wobei die grafische Benutzeroberfläche (600) weiter einen Objektauswahl-Listenbereich (602) umfasst;
wobei der Objektauswahl-Listenbereich (602) mindestens ein auswählbares Steuerobjekt umfasst, wobei das mindestens eine auswählbare Steuerobjekt dazu konfiguriert ist, dem Benutzer zu ermöglichen, Wiedergabe von einem oder mehreren der Audioobjekte zu aktivieren;
wobei der Objektauswahl-Listenbereich (602) eine Vielzahl von Steuerobjekte umfasst, und die Steuerobjekte im Objektauswahl-Listenbereich (602) in mehreren Gruppen eingerichtet sind; und
wobei die Zuordnung der Steuerobjekte zu den Gruppen auf dem jeweiligen Inhalt der Steuerobjekte basiert.

2. Verfahren nach Anspruch 1, wobei der jeweilige Inhalt eines ist aus:
für Berichterstattungen repräsentativ;
für Zuschauerlärm repräsentativ;
für Teamfunk repräsentativ; oder
für Chat in sozialen Medien repräsentativ.

3. Verfahren nach einem der vorstehenden Ansprüche, wobei der Objektauswahl-Listenbereich (602) mindestens ein weiteres auswählbares Steuerobjekt umfasst, wobei das mindestens eine weitere auswählbare Steuerobjekt dazu konfiguriert ist, dem Benutzer zu ermöglichen, eine Wiedergabelautstärke des einen oder der mehreren Audioobjekte auszuwählen, für das Wiedergabe aktiviert ist.

4. Verfahren nach einem der vorstehenden Ansprüche, wobei die Anzahl an Steuerobjekten in den Gruppen auf dem jeweiligen Inhalt der Steuerobjekte basiert.

5. Verfahren nach Anspruch 1, wobei das Heim-Audiowiedergabesystem Informationen empfängt, die sich auf das Audio beziehen, wobei die audio-bezogenen Informationen Ressourcen umfassen, die für ein aktuelles Programm des Audios spezifisch sind, wobei die Ressourcen Bilder für Symbole umfassen, die in Assoziation mit dem/den Steuerobjekt(en) im Objektauswahl-Listenbereich (602) und/oder im Positionierbereich (601, 700) angezeigt werden sollen.

6. Verfahren nach einem der vorstehenden Ansprüche, wobei das Heim-Audiowiedergabesystem zwei oder mehr Lautsprecher umfasst, die gemäß einer eingerichtet sind aus:
einer 2.0-Lautsprecherkonfiguration,
einer 5.1-Lautsprecherkonfiguration,
einer 7.1-Lautsprecherkonfiguration,
einer dreidimensionalen Lautsprecherkonfiguration, oder
einer Soundbar-Lautsprecherkonfiguration,
wobei die Lautsprecher in der 5.1-Lautsprecherkonfiguration und der 7.1-Lautsprecherkonfiguration in jeweiligen Kreisen um einen Mittelpunkt der Hörumgebung herum eingerichtet sind, und die Lautsprecher in der dreidimensionalen Lautsprecherkonfiguration in einer Halbkugel um den Mittelpunkt der Hörumgebung herum eingerichtet sind.

7. Verfahren nach einem der vorstehenden Ansprüche, das das Bestimmen eines Benutzerbefehls aus dem Eingabesignal umfasst, um Folgendes zu speichern:
die Auswahl des beweglichen Steuerobjekts (702), welches das mindestens eine aus dem einen oder den mehreren Audioobjekten repräsentiert, als eine Voreinstellung; und/oder
die vom Benutzer gewünschte Wiedergabeposition als eine Voreinstellung.

8. Verfahren nach einem der vorstehenden Ansprüche, umfassend:
Empfangen, über den Bitstrom, von Voreinstellungen für die Audioobjekte, wobei die Voreinstellungen eine Standardvoreinstellung enthalten, die bei Inhaltserstellung vorbereitet wurde, und gegebenenfalls eine oder mehrere alternative Voreinstellungen, die bei Inhaltserstellung vorbereitet wurden; und/oder
Darbieten, über die grafische Benutzeroberfläche, eines Menüs auswählbarer voreingestellter Mischungen der Audioobjekte und von Lautsprecherkanalinhalt, die im Bitstrom eingeschlossen sind, für den Benutzer.

9. Verfahren nach Anspruch 1, das das Kommunizieren des Konfigurationssignals an das Heim-Audiowiedergabesystem umfasst.

10. Vorrichtung zum Interagieren mit einem Heim-Audiowiedergabesystem, das einen Bitstrom empfängt, welcher Audiodaten und assoziierte Metadaten enthält, und zum Konfigurieren von Wiedergabe der Audiodaten über das Heim-Audiowiedergabesystem, wobei die Audiodaten ein oder mehrere Audioobjekte umfassen, und die assoziierten Metadaten eine gewünschte räumliche Audiodarbietung des einen oder der mehreren Audioobjekte angeben, wobei die Vorrichtung eine Anzeige, ein Eingabegerät und einen Prozessor (401) umfasst, der dazu konfiguriert ist:
ein Ausgabesignal (404) für die Anzeige zu erzeugen, wobei das Ausgabesignal (404) Daten umfasst, die eine grafische Benutzeroberfläche (600) repräsentieren, wobei die grafische Benutzeroberfläche (600) einen Positionierbereich (601, 700) umfasst, wobei der Positionierbereich (601, 700) eine visuelle Repräsentation einer Hörumgebung umfasst, die mit dem Heim-Audiowiedergabesystem assoziiert ist, und
wobei der Positionierbereich (601, 700) ein bewegliches Steuerobjekt (702) umfasst, das mindestens eines aus dem einen oder den mehreren Audioobjekten repräsentiert, wobei das bewegliche Steuerobjekt (702) durch Benutzerinteraktion mit der grafischen Benutzeroberfläche (600) über das Eingabegerät in Bezug auf die visuelle Repräsentation der Hörumgebung bewegt werden kann, wodurch ein aktueller Standort des beweglichen Steuerobjekts (702) von einem Benutzer ausgewählt werden kann, wobei der aktuelle Standort des beweglichen Steuerobjekts (702) für eine vom Benutzer für das mindestens eine aus dem einen oder den mehreren Audioobjekten gewünschte Wiedergabeposition innerhalb der Hörumgebung repräsentativ ist,
ein Eingabesignal vom Benutzer über das Eingabegerät zu empfangen, wobei das Eingabesignal Daten umfasst, die für die vom Benutzer für das mindestens eine aus dem einen oder den mehreren Audioobjekten gewünschte Wiedergabeposition repräsentativ ist;
ein Konfigurationssignal zum Konfigurieren Heim-Audiowiedergabesystems zu erzeugen, wobei das Konfigurationssignal Daten umfasst, um das Heim-Audiowiedergabesystem dazu zu bringen, das mindestens eine der Audioobjekte gemäß der vom Benutzer für das mindestens eine aus dem einen oder den mehreren Audioobjekten gewünschten Wiedergabeposition wiederzugeben;
wobei der Positionierbereich (601, 700) ein erstes visuelles Element mit einer ersten visuellen Angabe umfasst, dass das bewegliche Steuerobjekt (702), welches das mindestens eine aus dem einen oder den mehreren Audioobjekten repräsentiert, vom Benutzer ausgewählt wurde, und wobei das erste visuelle Element eine zweite visuelle Angabe umfasst, wenn das bewegliche Steuerobjekt (702), welches das mindestens eine aus dem einen oder den mehreren Audioobjekten repräsentiert, ein Audioobjekt repräsentiert, das aktuell Sound überträgt;
wobei der Positionierbereich (601, 700) ein zweites visuelles Element mit einer dritten visuellen Angabe umfasst, dass das bewegliche Steuerobjekt (702), welches das mindestens eine aus dem einen oder den mehreren Audioobjekten repräsentiert, bewegt werden kann, oder wobei das erste visuelle Element die dritte visuelle Angabe umfasst, dass das bewegliche Steuerobjekt (702), welches das mindestens eine aus dem einen oder den mehreren Audioobjekten repräsentiert, bewegt werden kann;
wobei der Positionierbereich (601, 700) weiter ein drittes visuelles Element umfasst, das dazu eingerichtet ist, mindestens einen gültigen Standort in Bezug auf die visuelle Repräsentation der Hörumgebung anzugeben, wobei der gültige Standort ein Standort ist, den das bewegliche Steuerobjekt (702) einnehmen kann, und ein viertes visuelles Element, das dazu eingerichtet ist, mindestens einen ungültigen Standort in Bezug auf die visuelle Repräsentation der Hörumgebung anzugeben, wobei der ungültige Standort ein Standort ist, den das bewegliche Steuerobjekt (702) nicht einnehmen kann;
**dadurch gekennzeichnet, dass** der Prozessor (401) weiter dazu konfiguriert ist, einen jeweiligen Inhalt des, oder jedes der, Audioobjekte zu bestimmen,
wobei die grafische Benutzeroberfläche (600) weiter einen Objektauswahl-Listenbereich (602) umfasst;
wobei der Objektauswahl-Listenbereich (602) mindestens ein auswählbares Steuerobjekt umfasst, wobei das mindestens eine auswählbare Steuerobjekt dazu konfiguriert ist, dem Benutzer zu ermöglichen, Wiedergabe von einem oder mehreren der Audioobjekte zu aktivieren;
wobei der Objektauswahl-Listenbereich (602) eine Vielzahl von Steuerobjekte umfasst, und die Steuerobjekte im Objektauswahl-Listenbereich (602) in mehreren Gruppen eingerichtet sind; und
wobei die Zuordnung der Steuerobjekte zu den Gruppen auf dem jeweiligen Inhalt der Steuerobjekte basiert.

11. Computerlesbares Medium, das auf demselben eine Vielzahl von computerinterpretierbaren Anweisungen aufweist, das, wenn es von einem Prozessor ausgeführt wird, den Prozessor dazu bringt, das Verfahren nach einem der Ansprüche 1 bis 9 durchzuführen.

## Revendications

1. Procédé de configuration de lecture de données audio par l'intermédiaire d'un système de lecture audio domestique qui reçoit un flux binaire incluant les données audio et des métadonnées associées, les données audio comprenant un ou plusieurs objets audio et les métadonnées associées étant indicatives d'une présentation audio spatiale souhaitée des un ou plusieurs objets audio, le procédé comprenant :
la génération d'un signal de sortie pour un affichage, le signal de sortie comprenant des données représentant une interface utilisateur graphique (600), l'interface utilisateur graphique (600) comprenant une zone de positionnement (601, 700), dans lequel la zone de positionnement (601, 700) comprend une représentation visuelle d'un environnement d'écoute associé au système de lecture audio domestique, et
dans lequel la zone de positionnement (601, 700) comprend un objet de commande mobile (702) qui représente au moins l'un desdits un ou plusieurs objets audio, l'objet de commande mobile (702) étant mobile par rapport à la représentation visuelle de l'environnement d'écoute par une interaction d'utilisateur avec l'interface utilisateur graphique (600) par l'intermédiaire d'un dispositif d'entrée, de telle manière qu'un emplacement actuel de l'objet de commande mobile (702) puisse être sélectionné par un utilisateur, l'emplacement actuel de l'objet de commande mobile (702) étant représentatif d'une position de lecture souhaitée par l'utilisateur à l'intérieur de l'environnement d'écoute pour l'au moins un des un ou plusieurs objets audio,
la réception d'un signal d'entrée en provenance de l'utilisateur par l'intermédiaire du dispositif d'entrée, le signal d'entrée comprenant des données représentatives de la position de lecture souhaitée par l'utilisateur pour l'au moins un des un ou plusieurs objets audio ;
la génération d'un signal de configuration pour la configuration du système de lecture audio domestique, le signal de configuration comprenant des données pour amener le système de lecture audio domestique à lire l'au moins un des objets audio en fonction de la position de lecture souhaitée par l'utilisateur pour l'au moins un des un ou plusieurs objets audio ;
dans lequel la zone de positionnement (601, 700) comprend un premier élément visuel avec une première indication visuelle que l'objet de commande mobile (702) représentant l'au moins un des un ou plusieurs objets audio a été sélectionné par l'utilisateur et dans lequel le premier élément visuel comprend une deuxième indication visuelle lorsque l'objet de commande mobile (702) représentant l'au moins un des un ou plusieurs objets audio représente un objet audio qui porte actuellement un son ;
dans lequel la zone de positionnement (601, 700) comprend un deuxième élément visuel avec une troisième indication visuelle que l'objet de commande mobile (702) représentant l'au moins un des un ou plusieurs objets mobiles est mobile, ou dans lequel le premier élément visuel comprend la troisième indication visuelle que l'objet de commande mobile (702) représentant l'au moins un des un ou plusieurs objets audio est mobile ;
dans lequel la zone de positionnement (601, 700) comprend en outre un troisième élément visuel agencé pour indiquer au moins un emplacement correct par rapport à la représentation visuelle de l'environnement d'écoute, l'emplacement correct étant un emplacement que l'objet de commande mobile (702) peut occuper, et un quatrième élément visuel agencé pour indiquer au moins un emplacement incorrect par rapport à la représentation visuelle de l'environnement d'écoute, l'emplacement incorrect étant un emplacement que l'objet de commande mobile (702) ne peut pas occuper;
**caractérisé en ce que** le procédé comprend en outre
la détermination d'un contenu respectif des objets audio ou de chacun d'eux,
dans lequel l'interface utilisateur graphique (600) comprend en outre une zone de liste de sélection d'objets (602) ;
dans lequel la zone de liste de sélection d'objets (602) comprend au moins un objet de commande sélectionnable, l'au moins un objet de commande sélectionnable étant configuré pour permettre à l'utilisateur d'activer une lecture d'un ou plusieurs des objets audio ;
dans lequel la zone de liste de sélection d'objets (602) comprend plusieurs objets de commande, et les objets de commande sont agencés dans plusieurs groupes dans la zone de liste de sélection d'objets (602) ; et
dans lequel l'allocation des objets de commande aux groupes est basée sur le contenu respectif des objets de commande.

2. Procédé selon la revendication 1, dans lequel le contenu respectif est l'un quelconque de :
représentatif de commentaire ;
représentatives de bruit de foule ;
représentatif de radio d'équipe ; ou
représentatif de conversations de réseaux sociaux.

3. Procédé selon l'une quelconque des revendications précédentes, dans lequel la zone de liste de sélection d'objets (602) comprend au moins un autre objet de commande sélectionnable, l'au moins un autre objet de commande sélectionnable étant configuré pour permettre à l'utilisateur de sélectionner un volume de lecture des un ou plusieurs objets audio pour lesquels une lecture est activée.

4. Procédé selon l'une quelconque des revendications précédentes, dans lequel le nombre d'objets de commande dans les groupes est basé sur le contenu respectif des objets de commande.

5. Procédé selon la revendication 1, dans lequel le système de lecture audio domestique reçoit des informations relatives à l'audio, les informations relatives à l'audio comprenant des ressources spécifiques à un programme actuel de l'audio, dans lequel les ressources comprennent des images pour des icônes à afficher en association avec les un ou plusieurs objets de commande dans la zone de liste de sélection d'objets (602) et/ou dans la zone de positionnement (601, 700).

6. Procédé selon l'une quelconque des revendications précédentes, dans lequel le système de lecture audio domestique comprend au moins deux haut-parleurs qui sont agencés selon l'une de :
une configuration de haut-parleurs 2.0,
une configuration de haut-parleurs 5.1,
une configuration de haut-parleurs 7.1,
une configuration de haut-parleurs tridimensionnelle, ou
une configuration de haut-parleurs en barre sonore,
dans lequel les haut-parleurs dans la configuration de haut-parleurs 5.1 et dans la configuration de haut-parleurs 7.1 sont agencés sur des cercles respectifs autour d'un centre de l'environnement d'écoute, et les haut-parleurs dans la configuration de haut-parleurs tridimensionnelle sont agencés sur une demi-sphère autour du centre de l'environnement d'écoute.

7. Procédé selon l'une quelconque des revendications précédentes, comprenant la détermination, à partir du signal d'entrée, d'une commande d'utilisateur pour mémoriser :
la sélection de l'objet de commande mobile (702) représentant l'au moins un des un ou plusieurs objets audio en tant qu'un préréglage ; et/ou
la position de lecture souhaitée par l'utilisateur en tant qu'un préréglage.

8. Procédé selon l'une quelconque des revendications précédentes, comprenant :
la réception, par l'intermédiaire du flux binaire, de préréglages pour les objets audio, les préréglages incluant un préréglage par défaut préparé à une création de contenu, et facultativement un ou plusieurs préréglages en variante préparés à une création de contenu ; et/ou
la présentation, par l'intermédiaire de l'interface utilisateur graphique, à l'utilisateur, d'un menu de mélanges de préréglages sélectionnables des objets audio et d'un contenu de canal de haut-parleurs inclus dans le flux binaire.

9. Procédé selon la revendication 1, comprenant la communication du signal de configuration au système de lecture audio domestique.

10. Appareil permettant d'interagir avec un système de lecture audio domestique qui reçoit un flux binaire incluant des données audio et des métadonnées associées, et de configurer une lecture des données audio par l'intermédiaire du système de lecture audio domestique, les données audio comprenant un ou plusieurs objets audio et les métadonnées associées étant indicatives d'une présentation audio spatiale souhaitée des un ou plusieurs objets audio, l'appareil comprenant un affichage, un dispositif d'entrée, et un processeur (401) configuré pour :
la génération d'un signal de sortie (404) pour l'affichage, le signal de sortie (404) comprenant des données représentant une interface utilisateur graphique (600), l'interface utilisateur graphique (600) comprenant une zone de positionnement (601, 700), dans lequel la zone de positionnement (601, 700) comprend une représentation visuelle d'un environnement d'écoute associé au système de lecture audio domestique, et
dans lequel la zone de positionnement (601, 700) comprend un objet de commande mobile (702) qui représente au moins l'un desdits un ou plusieurs objets audio, l'objet de commande mobile (702) étant mobile par rapport à la représentation visuelle de l'environnement d'écoute par une interaction d'utilisateur avec l'interface utilisateur graphique (600) par l'intermédiaire du dispositif d'entrée, de telle manière qu'un emplacement actuel de l'objet de commande mobile (702) puisse être sélectionné par un utilisateur, l'emplacement actuel de l'objet de commande mobile (702) étant représentatif d'une position de lecture souhaitée par l'utilisateur à l'intérieur de l'environnement d'écoute pour l'au moins un des un ou plusieurs objets audio,
la réception d'un signal d'entrée en provenance de l'utilisateur par l'intermédiaire du dispositif d'entrée, le signal d'entrée comprenant des données représentatives de la position de lecture souhaitée par l'utilisateur pour l'au moins un des un ou plusieurs objets audio ;
la génération d'un signal de configuration pour la configuration du système de lecture audio domestique, le signal de configuration comprenant des données pour amener le système de lecture audio domestique à lire l'au moins un des objets audio en fonction de la position de lecture souhaitée par l'utilisateur pour l'au moins un des un ou plusieurs objets audio ;
dans lequel la zone de positionnement (601, 700) comprend un premier élément visuel avec une première indication visuelle que l'objet de commande mobile (702) représentant l'au moins un des un ou plusieurs objets audio a été sélectionné par l'utilisateur et dans lequel le premier élément visuel comprend une deuxième indication visuelle lorsque l'objet de commande mobile (702) représentant l'au moins un des un ou plusieurs objets audio représente un objet audio qui porte actuellement un son ;
dans lequel la zone de positionnement (601, 700) comprend un deuxième élément visuel avec une troisième indication visuelle que l'objet de commande mobile (702) représentant l'au moins un des un ou plusieurs objets mobiles est mobile, ou dans lequel le premier élément visuel comprend la troisième indication visuelle que l'objet de commande mobile (702) représentant l'au moins un des un ou plusieurs objets audio est mobile ;
dans lequel la zone de positionnement (601, 700) comprend en outre un troisième élément visuel agencé pour indiquer au moins un emplacement correct par rapport à la représentation visuelle de l'environnement d'écoute, l'emplacement correct étant un emplacement que l'objet de commande mobile (702) peut occuper, et un quatrième élément visuel agencé pour indiquer au moins un emplacement incorrect par rapport à la représentation visuelle de l'environnement d'écoute, l'emplacement incorrect étant un emplacement que l'objet de commande mobile (702) ne peut pas occuper;
**caractérisé en ce que** le processeur (401) est en outre configuré pour :
la détermination d'un contenu respectif des objets audio ou de chacun d'eux,
dans lequel l'interface utilisateur graphique (600) comprend en outre une zone de liste de sélection d'objets (602) ;
dans lequel la zone de liste de sélection d'objets (602) comprend au moins un objet de commande sélectionnable, l'au moins un objet de commande sélectionnable étant configuré pour permettre à l'utilisateur d'activer une lecture d'un ou plusieurs des objets audio ;
dans lequel la zone de liste de sélection d'objets (602) comprend plusieurs objets de commande, et les objets de commande sont agencés dans plusieurs groupes dans la zone de liste de sélection d'objets (602) ; et
dans lequel l'allocation des objets de commande aux groupes est basée sur le contenu respectif des objets de commande.

11. Support lisible par ordinateur sur lequel sont mémorisées une pluralité d'instructions interprétables par ordinateur qui, lorsqu'elles sont exécutées par un processeur, amènent le processeur à effectuer le procédé selon l'une quelconque des revendications 1 à 9.
